(19) Europäisches Patentamt
European Patent Office
Office européen des brevets

(11) **EP 4 389 507 A1**

(12) **EUROPEAN PATENT APPLICATION**

(43) Date of publication:
**26.06.2024 Bulletin 2024/26**

(21) Application number: **23219364.9**

(22) Date of filing: **21.12.2023**

(51) International Patent Classification (IPC):
**B60L 53/62** (2019.01)   **B60L 53/63** (2019.01)
**B60L 53/65** (2019.01)   **B60L 53/66** (2019.01)
**B60L 53/67** (2019.01)   **B60L 53/68** (2019.01)
**B60L 58/12** (2019.01)

(52) Cooperative Patent Classification (CPC):
**B60L 53/67; B60L 53/62; B60L 53/63; B60L 53/65;
B60L 53/66; B60L 53/68; B60L 58/12**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2022 US 202218145509**

(71) Applicants:
• **The Regents of the University of California
  Oakland, CA 94607-5200 (US)**
• **TotalEnergies OneTech
  92400 Courbevoie (FR)**

(72) Inventors:
• **JU, Yi
  Berkeley, 94703 (US)**
• **ZENG, Teng
  Emeryville, 94608 (US)**
• **ALLYBOKUS, Zaid
  93500 Pantin (FR)**
• **MOURA, Scott
  Berkeley, 94703 (US)**

(74) Representative: **Maiwald GmbH
Engineering
Elisenhof
Elisenstrasse 3
80335 München (DE)**

(54) **METHOD AND APPARATUS FOR OPERATING ELECTRIC VEHICLE CHARGING INFRASTRUCTURE**

(57)     A method for operating an electric vehicle charging station that comprises a first number of fixed chargers and a second number of mobile devices. Each of the mobile devices moves in the charging station to plug and unplug an electric vehicle. The method includes, at a time step, obtaining, upon receiving a charging request from an electric vehicle arriving at a beginning of the time step, a first charging demand; deriving, upon receiving charging dynamics of an electric vehicle having been staying at the charging station before the time step, a second charging demand; generating, with respect to an optimization horizon including the time step and a plurality of subsequent time steps, a charging demand forecast; and solving, with respect to the optimization horizon, an optimal operation solution, based on the first charging demand, the second charging demand, and the charging demand forecast.

Fixed-charger

FIG. 1

EP 4 389 507 A1

**Description**

BACKGROUND

FIELD

The present disclosure relates to plug-in electric vehicle (PEV) charging infrastructure. In particularly, the disclosure relates to a method and apparatus for configuration and control of a mixed-type charger charging station (MCCS). The method and apparatus advantageously use robotic chargers (or robo-chargers) that proactively operate among PEVs so as to alleviate the "overstay" issue. Moreover, the method and apparatus formulate the operation and planning of the MCCS as a mixed-integer linear programming (MILP) problem, enabling in-depth optimizations on charger assignments, plug-in/out schedules, charging power, and facility planning of the charging station.

DESCRIPTION OF THE RELATED ART

Forecasts project that the global sales of plug-in electric vehicles (PEVs) will exceed 15.6 million units in 2030, and that more than 50% of new cars sold globally by 2040 will be electric vehicles. However, the continued growth of PEVs may be impeded by limited accessibility to charging infrastructure. Although governments and private companies have put forth great efforts to deploy public charging systems, there remains a large gap between the current service capability and the expected PEV deployment. That is, PEV penetration has outpaced charging station deployment. In urban areas, especially central business districts, competition for charging resources is high.

The limited charging resources are being utilized uneconomically. Typically, after a charger is plugged into a vehicle, the charger will remain occupied and unavailable to others (even if that PEV is not being charged) until the driver returns from work, shopping, dining, etc. This behavior is called "overstay". Today, overstay can potentially occupy a charger for 6-8 hours in a typical day, preventing availability of the charger to other vehicles, especially in charging stations equipped with level-2 chargers. This issue has been identified as the "bottleneck" of service capacity, since overstaying vehicles hinder access of new arrivals to the facilities, exacerbating the problem of the inadequate charging infrastructure.

In response to the overstay problem, three types of approaches have been suggested by literature, namely, infrastructure upgrades, penalty/incentive design, and "interchange" operations.

Infrastructure upgrades enhance the capacity of a station by installing more chargers, upgrading to fast chargers, or introducing multi-cable chargers and battery swapping. *See, e.g.,* H. Zhang, Z. Hu, Z. Xu, and Y. Song, Optimal Planning of PEV Charging Station with Single Output Multiple Cables Charging Spots, IEEE Transactions on Smart Grid, vol. 8, no. 5, pp. 2119-2128, Sep. 2017; *see also* M. R. Sarker, H. Pandzic, and M. A. Ortega.-Vazquez, Optimal Operation and Services Scheduling for an Electric Vehicle Battery Swapping Station, IEEE Transactions on Power Systems, vol. 30, no. 2, pp. 901-910, Mar. 2015. Infrastructure upgrades usually increase capital investment considerably at the early stage, and may be heavily penalized by the grid demand charge term for a higher aggregate power.

Penalty/incentive design plays an important role in station management. The charging station can introduce an hourly penalty to discourage overstays, or it may incentivize overstayed PEVs to accept a flexible charging schedule, so that power of different ports can be planned coordinately. *See, e.g.,* J. Lindgren and P. D. Lund, Identifying Bottlenecks in Charging Infrastructure of Plug-In Hybrid Electric Vehicles Through Agent-Based Traffic Simulation, International Journal of Low-Carbon Technologies, vol. 10, no. 2, pp. 110-118, Jun. 2015; *see also* T. Zeng, S. Bae, B. Travacca, and S. Moura, Inducing Human Behavior to Maximize Operation Performance at PEV Charging Station, IEEE Transactions on Smart Grid, vol. 12, no. 4, pp. 3353-3363, Jul. 2021; and C. Lu, J. Wu, J. Cui, Y. Xu, C. Wu, and M. C. Gonzalez, Deadline Differentiated Dynamic EV Charging Price Menu Design, IEEE Transactions on Smart Grid, pp. 1-1, 2022. However, there is a lack of empirical research on estimating users' utility functions.

Interchange operations refer to the operation to plug and unplug PEVs during their stay. *See, e.g.,* T. Zeng, H. Zhang, and S. Moura, Solving Overstay and Stochasticity in PEV Charging Station Planning with Real Data, IEEE Transactions on Industrial Informatics, vol. 16, no. 5, pp. 3504-3514, 2020. For example, a human valet is responsible for unplugging a PEV once it has been fully-charged, removing it from the spot, and moving a waiting vehicle in to get the charging service. Similar ideas are intensively investigated at the district network level, including vehicle-to-vehicle (V2V) charging, on-route charging-as-a-service, and on-demand valet charging, etc. *See, e.g.,* X. Zhang, Y. Cao, L. Peng, J. Li, N. Ahmad, and S. Yu, Mobile Charging as a Service: A Reservation-Based Approach, IEEE Transactions on Automation Science and Engineering, vol. 17, no. 4, pp. 1976-1988, 2020; *see also* J. Qiu and L. Du, A Charging-as-a-Service Platform for Charging Electric Vehicles on the Move: New Vehicle Routing Model and Solution, Apr. 2021, arXiv:2104.00730 [math]_ [Online].; and Z. Lai and S. Li, On-Demand Valet Charging for Electric Vehicles: Economic Equilibrium, Infrastructure Planning and Regulatory Incentives, Transportation Research Part C: Emerging Technologies, vol. 140, p. 103669, Jul. 2022. Research on how to incorporate interchange operations for single station optimal operation is limited.

There is a need to alleviate the overstay issue and to enhance the service capacity and efficiency of charging stations.

SUMMARY

In an exemplary embodiment, a method is described for operating an electric vehicle charging station that includes a first number of fixed chargers and a second number of mobile devices. Each of the mobile devices moves in the charging station to plug and unplug an electric vehicle. The method includes at a time step, obtaining, upon receiving a charging request from an electric vehicle arriving at a beginning of the time step, a first charging demand; deriving, upon receiving charging dynamics of an electric vehicle having been staying at the charging station before the time step, a second charging demand; generating, with respect to an optimization horizon including the time step and a plurality of subsequent time steps, a charging demand forecast; and solving, with respect to the optimization horizon, an optimal operation solution, based on the first charging demand, the second charging demand, and the charging demand forecast.

In an exemplary embodiment, an apparatus is described for operating an electric vehicle charging station that includes a first number of fixed chargers and a second number of mobile devices. Each of the mobile devices moves in the charging station to plug and unplug an electric vehicle. The apparatus includes a processor and a non-transitory memory storing instructions executable by the processor. The instructions, when executed by the processor, perform a method including at a time step, obtaining, upon receiving a charging request from an electric vehicle arriving at a beginning of the time step, a first charging demand; deriving, upon receiving charging dynamics of an electric vehicle having been staying at the charging station before the time step, a second charging demand; generating, with respect to an optimization horizon including the time step and a plurality of subsequent time steps, a charging demand forecast; and solving, with respect to the optimization horizon, an optimal operation solution, based on the first charging demand, the second charging demand, and the charging demand forecast.

The foregoing general description of the illustrative embodiments and the following detailed description thereof are merely exemplary aspects of the teachings of this disclosure, and are not restrictive.

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

FIG. 1 shows a scenario involving the overstay issue in a typical charging station equipped with only fixed chargers;

FIG. 2 shows a scenario involving a robotic charger that automatically performs an interchange operation, in accordance with exemplary embodiments of the present disclosure;

FIG. 3 shows a scenario involving a charging station that provides charging services to electric vehicles by both a fixed charger and a robotic charger, in accordance with exemplary embodiments of the present disclosure;

FIG. 4 shows a block diagram of a mixed-type charger charging station, in accordance with exemplary embodiments of the present disclosure;

FIG. 5 shows a block diagram of an apparatus for managing the operation of a mixed-type charger charging station, in accordance with exemplary embodiments of the present disclosure;

FIG. 6 shows a flow chart of a process performed by an apparatus for managing the operation of a mixed-type charger charging station, in accordance with exemplary embodiments of the present disclosure;

FIG. 7 shows a block diagram of a robotic charger, in accordance with exemplary embodiments of the present disclosure;

FIG. 8 shows a flow chart of a process performed by a robotic charger, in accordance with exemplary embodiments of the present disclosure;

FIG. 9 shows a scenario where 20 PEVs (#0-#19) arrive for charging services at a mixed-type charger charging station equipped with three fixed chargers and one robotic charger, in accordance with exemplary embodiments of the present disclosure;

FIGs. 10A and 10B are graphs illustrating different total costs of ownership, operation expenses, and satisfaction rates achieved with different combinations of fixed chargers and robotic chargers, in accordance with exemplary embodiments of the present disclosure;

FIGs. 11A and 11B are graphs illustrating different operation expenses and satisfaction rates achieved with different combinations of fixed chargers and robotic chargers, in accordance with exemplary embodiments of the present disclosure; and

FIG. 12 is an illustration of a non-limiting example of computing hardware that may form an apparatus for managing the operation of a mixed-type charger charging station, according to exemplary embodiments of the present disclosure.

## DETAILED DESCRIPTION OF THE PREFERRED EMBODIMENTS

Referring now to the drawings, wherein like reference numerals designate identical or corresponding parts throughout the several views. Aspects of the present disclosure describe a method and apparatus for incorporating robotic chargers into a PEV charging station to mitigate the overstay problem and maximize throughput and/or profit of the charging station.

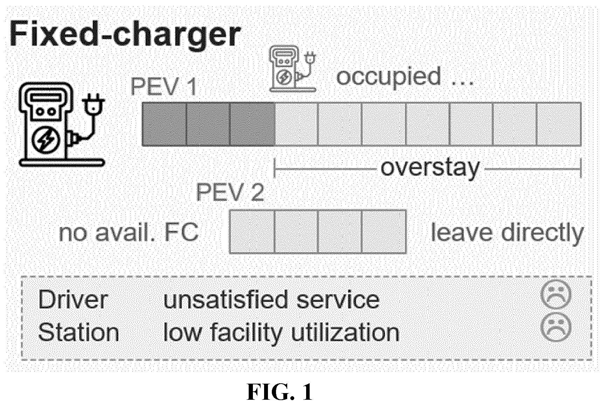

As used in this disclosure, "fixed chargers" refer to off-the-shelf chargers, each of which typically serves a particular parking spot (illustrated in FIG. 1, for example), and will be occupied by the plugged-in PEVs throughout their duration, no matter whether they have already been fully-charged or not. FIG. 1 shows a typical scenario involving the potentially resulted overstay issue in a charging station equipped with only fixed chargers. As shown in FIG. 1, the fixed charger is occupied by an electric vehicle PEV 1 even after charging is complete. As there are no available chargers, another electric vehicle, PEV 2, has to leave directly, leading to unsatisfied service and low facility utilization.

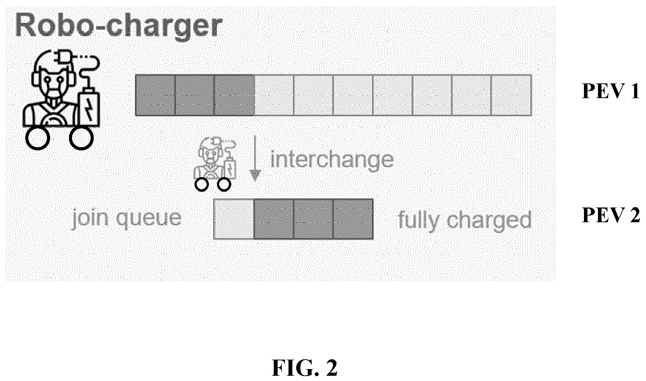

As used in this disclosure, "robotic chargers" (or "robo-chargers") are robot-based chargers that are capable of routing automatically in a charging station to plug and unplug PEVs. FIG. 2 shows a scenario involving a robotic charger that automatically performs an interchange operation, in accordance with exemplary embodiments of the present disclosure. As the robotic charger can unplug PEV 1 once it has been fully-charged and turns to charge the next PEV waiting in a service queue, e.g., PEV 2, it is less possible for the charging station to suffer from the opportunity loss caused by the overstay issue. Although in the drawings and the description below, it is a robotic charger that automatically moves to, plugs, and unplugs the PEVs, one skilled in the art can appreciate other feasible ways to implement similar functions, including but not limited to, a mobile device maneuvered by a human operator to perform the interchange operations based on optimized schedules.

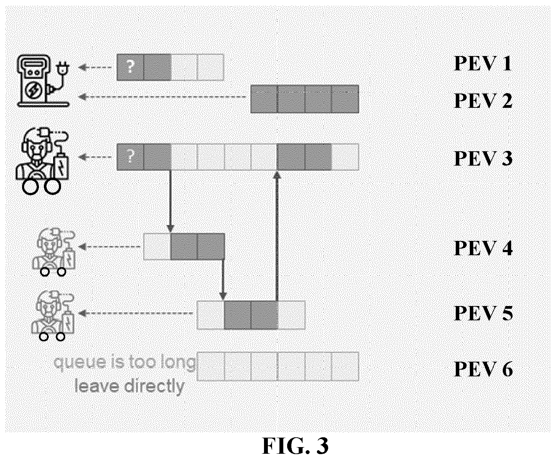

FIG. 3 shows a scenario involving a charging station with both a fixed charger and a robotic charger that provides charging services to electric vehicles, in accordance with exemplary embodiments of the present disclosure. Drivers of electric vehicles can have flexible options. For example, while the fixed charger is occupied by PEV 1, the driver of PEV 2 can stay in her vehicle and wait until the fixed charger is available. Advantageously, in the case of a robotic charger, waiting will be much more acceptable. Drivers can add their cars in a waiting queue by simply picking a spot to park them and informing the charging station of their departure times, and then they can leave. When the waiting queue is too long, drivers can leave directly.

As exemplarily shown in FIG. 3, while the robotic charger is charging PEV 3, PEVs 4 and 5 can be added into the waiting queue, and the robotic charger will proactively rotate among PEVs 3, 4, and 5. Depending on the respective departure times of PEVs in the waiting queue, the charging sessions do not necessarily have to be completed sequentially. The charging session of PEV 3 illustrates the possibility of multiple interchange operations, for example.

In order to maximize throughput and/or profit of the charging station, it is important to optimize the control and planning of the fixed chargers and the robotic chargers. First, to live up to customers' expectations requires highly optimized dispatch operations. When the charging station performs sub-optimally, some of the waiting cars may not get fully-charged, which would result in a rising unsatisfaction rate. Moreover, since robotic chargers are more advanced in both hardware and software than fixed chargers, the capital costs are expected to increase, approximately by 50% or even more. The trade-off between increased initial investment and improving operation revenues needs to be carefully balanced.

Given the opportunities and complexities mentioned above, it is desired to design an optimization model to quantify both the pros and cons given a sequence of operations, and optimize the control of the charging station based on the model. In the optimization model, a constraint can be enforced that only a limited number of chargers can be accessed simultaneously. Further, drivers' "leave-or-wait" behavior can be integrated into the optimization model. Besides, charging dynamics and physical constraints of the PEVs/chargers can be considered. In addition, energy time-of-use (TOU) tariffs, grid demand charges, and unsatisfied penalties can be taken into account.

The MCCS optimal operation problem can be categorized into three types of decision making sub-problems: (i) deciding, for each PEV that stays to take service, to assign it to a specific fixed charger, or add it into the service queue of the robotic chargers; (ii) deciding at each time step within an optimization horizon, how to plug/unplug PEVs in the service queue by robotic chargers, if there are more PEVs than the robotic chargers; (iii) optimizing at each time step the charging power of each charger.

The MCCS planning problem mainly involves determining an optimal combination of fixed chargers and robotic chargers to maximize the profit of the charging station with required service capacity. In other words, given a collection of typical daily charging demands, considering different capital costs and operation costs of the two types of chargers, a planning model is designed to solve a best portfolio of fixed chargers and robotic chargers.

Both the operation model and the planning model can be reformulated as a mixed-integer linear programming (MILP) problem. In this disclosure, the set of real numbers is denoted by $\mathbb{R}$, the set of integers by $\mathbb{Z}$, and the set of natural numbers by $\mathbb{N}$. The sets of non-negative real and integers are denoted by $\mathbb{R}_{\geq 0}$ and $\mathbb{Z}_{\geq 0}$, respectively. In addition, $[a, b] = \{z \in \mathbb{Z} \mid a \leq z \leq b\}$).

Functions $1\{\cdot\}$, $[\cdot]^+$, $[\cdot]^-$, $\lfloor \cdot \rfloor$ are used in their conventional meanings. That is, $1\{x\} = 1$ if x is true; otherwise, $1\{x\} = 0$. $[x]^+ = \max\{0, x\}$. $[x]^- = \min\{0, x\}$. $\lfloor x \rfloor = \max\{z \in \mathbb{Z} \mid z \leq x\}$. For consistency, lowercase letters (e.g., x) are used for (decision) variables, uppercase letters (e.g., $X$) and Greek letters (e.g., $\alpha$) for parameters, and calligraphic uppercase letters (e.g., $\mathcal{X}$) for sets.

Some notations are used frequently with specific meanings as follows:

$M$: The number of fixed chargers.

$N$: The number of robotic chargers.

$\mathcal{T} = [0, T]$: Index of time steps within an optimization horizon and its set. $\mathcal{T} = [0, T]$ where $t = T$ is only defined for state variables. $\Delta t$ is the length of the time step. $t_i^a, t_i^d$ means PEV $i$ arrives/departs at the beginning of the time step.

$i, \mathcal{I}$: Index of PEVs and its set. $\mathcal{I} = [1, I]$.

$x_i^{fix}, x_i^{robo}, x_i^{leave} \in \{0, 1\}$: Whether PEV $i$ is assigned to a fixed charger, the robotic chargers, or leave directly.

$x_{i,t}^{plug} \in \{0, 1\}$: Whether PEV $i$ is plugged-in at time step $t$.

$p_{i,t}$: Charging power for PEV $i$ at time step $t$.

$e_{i,t}$: Charge of PEV $i$ at the beginning of time step $t$.

$\omega$: Waiting-tolerance factor, indicating how long a waiting queue is acceptable for customers. Beyond this waiting-tolerance, customers will leave directly; otherwise, they will choose to join the waiting queue of the robotic chargers.

A particular PEV $i$ is characterized by a three-tuple ($t_i^a, t_i^d, E_i^{dem}$) indicating its arrival time, departure time, and energy demand. An auxiliary binary parameter $\mathbb{I}_{i,t} := 1\{t_i^a \leq t < t_i^d\}$ is introduced to indicate whether PEV $i$ is in the charging station at time step $t$.

As described above, a fundamental difference between fixed chargers and robotic chargers is whether a plugged-in vehicle can be unplugged in its duration. Such characteristic is an origin that leads to the difference in performances of the two types of chargers. This characteristic is formalized below.

Variables $x_i^{fix}, x_i^{robo}, x_i^{leave} \in \{0, 1\}$ are indicators of whether PEV $i$ is assigned to a fixed charger, robotic chargers, or it leaves directly. One and only one of the three events can be true, thus,

$$x_i^{\text{fix}} + x_i^{\text{robo}} + x_i^{\text{leave}} = 1, \quad \forall i \qquad (1)$$

Note that above indicators are time-invariant, i.e., the charger type of PEV $i$ will not change during the charging session of the PEV, and will be decided upon arrival of the PEV.

In order to describe the potential plug-in status switches within sessions, a time-varying variable $x_{i,t}^{plug} \in \{0, 1\}$ is introduced to indicate whether PEV $i$ is plugged-in at time step $t$ or not. The variable $x_{i,t}^{plug}$ is constrained by the following observations: When (i) PEV $i$ is not supposed to be at charging station at time step $t$, or (ii) it chooses to leave directly, it is certainly not being plugged-in. When PEV $i$ is staying at the charging station, and (iii.a) if it is assigned to a fixed charger, it is certainly being plugged-in. While (iii.b) if it is assigned to robotic chargers, its plug-in status can be time-varying and is to be optimized. Above rules can be written compactly as:

$$\mathbb{I}_{i,t}x_i^{\text{fix}} \le x_{i,t}^{\text{plug}} \le \mathbb{I}_{i,t}\left(1 - x_i^{\text{leave}}\right), \quad \forall i, \forall t \qquad (2)$$

One of the invariant rules both fixed chargers and robotic chargers should observe is that the number of plugged-in PEVs simultaneously at any time step $t$ cannot exceed the number of chargers. Suppose the numbers of fixed chargers and of robotic chargers in the charging station are M and N, respectively, then such constraints read as follows:

$$\sum_{i=1}^{I} x_i^{\text{fix}} x_{i,t}^{\text{plug}} \le M, \quad \forall t \qquad (3)$$

$$\sum_{i=1}^{I} x_i^{\text{robo}} x_{i,t}^{\text{plug}} \le N, \quad \forall t \qquad (4)$$

There may be more than N vehicles assigned to robotic chargers that are staying at the charging station simultaneously, but at most N of them can be plugged-in, with others waiting.

Technically, if N = 0, there is a need to explicitly require $x_i^{robo} = 0$ for all $i$, as required by (5). There might be some PEVs already in the charging station (and thus having been assigned to one type of chargers) at the beginning of the optimization horizon. Their charger assignments are tracked by indicators $x_{i,0}^{fix}$ and $x_{i,0}^{robo}$, and their charger types will be kept, as required by (6) and (7).

$$x_i^{\text{robo}} \le N, \quad \forall i \qquad (5)$$

$$x_i^{\text{fix}} \ge X_{i,0}^{\text{fix}}, \quad \forall i \qquad (6)$$

$$x_i^{\text{robo}} \ge X_{i,0}^{\text{robo}}, \quad \forall i \qquad (7)$$

For each PEV, the following constraints for charging power and status of charge (SoC) should be satisfied:

$$0 \le p_{i,t} \le \overline{P}_i x_{i,t}^{\text{plug}}, \quad \forall i, \forall t \qquad (8)$$

$$e_{i,t} = e_{i,t-1} + \eta p_{i,t}\Delta t, \quad \forall i, \forall t > 0 \qquad (9)$$

$$e_{i,0} = e_{i,t_i^a} = E_i^{\text{init}}, \quad \forall i \qquad (10)$$

$$e_{i,t_i^d} = \left(E_i^{\text{targ}} - E_i^{\text{init}}\right)\left(1 - x_i^{\text{leave}}\right) + E_i^{\text{init}}, \quad \forall i \qquad (11)$$

where $E_i^{init}$ and $E_i^{targ}$ are the initial and the target charges of PEV $I$, respectively, $E_i^{dem} = E_i^{targ} - E_i^{init}$, $\overline{P}_i$ is the maximum charging power, and $\eta$ is charging efficacy.

Equation (11) requires each PEV to get fully-charged by its departure. In some circumstances, such a constraint is infeasible (e.g., when there are too many waiting PEVs) or unprofitable (e.g., when the grid TOU is higher than the charging fee). Thus, $\tilde{p}_{i,t}$ is introduced to capture the curtailed power, which will finally be summed as the unsatisfied energy and be penalized. With $\tilde{p}_{i,t}$ and the corresponding $\tilde{e}_{i,t}$, constraints (12) - (17) are softened as:

$$0 \leq p_{i,t} \leq \overline{P}_i x_{i,t}^{\text{plug}}, \quad \forall i, \forall t \qquad (12)$$

$$e_{i,t} = e_{i,t-1} + \eta p_{i,t} \Delta t, \quad \forall i, \forall t > 0 \qquad (13)$$

$$p_{i,t} \leq p_{i,t} + \widetilde{p}_{i,t} \leq \overline{P}_i \mathbb{I}_{i,t}, \quad \forall i, \forall t \qquad (14)$$

$$\widetilde{e}_{i,t} = \widetilde{e}_{i,t-1} + \eta \left( p_{i,t} + \widetilde{p}_{i,t} \right) \Delta t, \quad \forall i, \forall t > 0 \qquad (15)$$

$$e_{i,0} = \widetilde{e}_{i,0} = E_i^{\text{init}}, \quad \forall i \qquad (16)$$

$$\widetilde{e}_{i,t_i^{\text{d}}} = (E_i^{\text{targ}} - E_i^{\text{init}})(1 - x_i^{\text{leave}}) + E_i^{\text{init}}, \quad \forall i \qquad (17)$$

It is the drivers of PEVs who decide whether to stay to get charging services or leave directly. However, the drivers' decisions depend on the operation situation of the charging station at their arrivals. Thus, although $x_i^{leave}$ is a decision variable in the formulation, it (or more precisely, its probability distribution) can be determined given all the operations before $t_i^a$. The set of constraints determining the values of $x_i^{leave}$ is referred to as a leave-or-wait model in this disclosure.

In the leave-or-wait model, the drivers' decisions are based on their estimated chance that their PEVs would be fully charged by the declared departure times. Based on the length of the service queue upon their arrival, drivers decide whether to stay to take charging services or to leave the charging station. The service queue here refers to all the PEVs in the charging station that would potentially compete for chargers. For fixed chargers, it is simply all onsite PEVs assigned to the fixed chargers. For robotic chargers, it refers to all PEVs in the charging station that are assigned to the robotic chargers and have not been fully-charged. Although the real dynamics can be more complicated, nonetheless, this simplified model captures the challenge of losing customers.

In a non-limiting embodiment, an ω-tolerance model can be adopted: Suppose there are N robotic chargers, the driver waits if there are an available fixed charger, or at most $\lfloor (1+\omega)N \rfloor - 1$ PEVs are currently in the service queue of the robotic chargers; otherwise, she leaves directly. Such a model can be mathematically formalized as:

$$x_i^{\text{leave}} = 1\{v_i^{\text{fix}} + v_i^{\text{robo}} \leq 0\} \qquad (18)$$

where $v_i^{fix}$ and $v_i^{robo}$ are the numbers of available vacancies (i.e., charging and waiting ports) for fixed chargers and robotic chargers at the arrival of PEV *i*, respectively.

Let $q_i^{fix}$ and $q_i^{robo}$ be the queue lengths of fixed chargers and robotic chargers at the arrival of PEV *i*, then,

$$v_i^{\text{fix}} = \left[ M - q_i^{\text{fix}} \right]^+, \quad \forall i \qquad (19)$$

$$v_i^{\text{robo}} = \left[ \lfloor (1+\omega)N \rfloor - q_i^{\text{robo}} \right]^+, \quad \forall i \qquad (20)$$

Suppose PEVs are indexed by their arrival time, i.e., a smaller index indicates coming earlier thus also making the decision earlier (even through there can be two or more PEVs having the same arrival time). Then, $q_i^{fix}$ and

$q_i^{robo}$ follow the constraints below:

$$q_i^{\text{fix}} = \sum_{j=1}^{i-1} x_j^{\text{fix}} \mathbb{I}_{j,t_i^a}, \quad \forall i \qquad (21)$$

$$q_i^{\text{robo}} = \sum_{j=1}^{i-1} x_j^{\text{robo}} \mathbb{I}_{j,t_i^a} 1\{e_{j,t_i^a-1} < e_j^{\text{targ}}\}, \quad \forall i \qquad (22)$$

At the arrival of PEV $i$, the queue of the fixed chargers includes all PEVS that arrive earlier, are assigned to the fixed chargers, and still in the station by $t_i^a$. The queue of the robotic chargers includes those that arrive earlier, are assigned to the robotic chargers, still in the station, and have not been fully charged.

Given the number M of fixed chargers, the number N of robotic chargers, and the charging demand $\mathcal{D}_{\mathcal{T}} := \{(t_i^a, t_i^d, E_i^{\text{dem}})\}_{i \in \mathcal{I}}$, as well as other calculation parameters (such as grid TOU $\{\beta_t\}_{t \in \mathcal{T}}$, charging power limits $\bar{P}_i$ and waiting-tolerance factor $\omega$, etc.), the goal of optimization of the charging station is to find an optimal sequence of operation on:

1) whether to assign a PEV to a fixed charger or the service queue of robotic chargers ($\mathbf{x}^{\text{fix}} = \{x_i^{\text{fix}}\}_{\mathcal{I}}$, $\mathbf{x}^{\text{robo}} = \{x_i^{\text{robo}}\}_{\mathcal{I}}$);

2) for PEVs assigned to robotic chargers, when should they be plugged-in to get charged ($\mathbf{x}^{\text{plug}} = \{x_{i,t}^{\text{plug}}\}_{\mathcal{I} \times \mathcal{T}}$);

3) when PEVs are being charged, what the charging power should be ($\mathbf{p} = \{p_{i,t}\}_{\mathcal{I} \times \mathcal{T}}$).

The objective is to maximize the operating profit, i.e., minimize the operating expenditure (OPEX), considering income from charging fee $C^{\text{fee}}$, expenses for grid energy consumption $C^{\text{TOU}}$, penalty on customers' disappointment $C^{\text{disapp}}$, demand charges $C^{\text{dc}}$ and also switching costs $C^{\text{switch}}$. The demand charges $C^{\text{dc}}$ are based on the maximum charging power within a billing cycle. The switching costs $C^{\text{switch}}$ are introduced in the model to penalize frequent plug-in and plug-out, and thus to avoid some unnecessary, or meaningless, charging behaviors (For example, compare two charging schedules of a robotic charger: A) 1-N-1-N-1-N-1-N, and B) 1-1-1-1-1-1, where "N" means the robotic charger does not plug in any PEV, and "1" means the robotic charger plugs in a PEV and the charging power is not 0. The charging schedule B is preferred; A is meaningless and unnecessary.). Customers' disappointment $u_i^{disapp}$ can be evaluated by a piece-wise linear function with the unsatisfied charge of PEV $i$, where $\theta_k$s are some thresholds for short-in-charge.

$$\min_{\mathbf{x}^{\text{fix}}, \mathbf{x}^{\text{robo}}, \mathbf{x}^{\text{plug}}, \mathbf{p}} \text{OPEX}$$

$$= \underbrace{\sum_{i=1}^{I} \sum_{t=0}^{T-1} (\beta_t - \gamma) p_{i,t} \Delta t}_{C^{\text{TOU}} - C^{\text{fee}}} + \underbrace{\beta^{\text{dc}} p^{\text{dc}}}_{C^{\text{dc}}}$$

$$+ \underbrace{\sum_{i=1}^{I} \sum_{t=0}^{T-1} \beta^{\text{switch}} x_{i,t}^{\text{switch}}}_{C^{\text{switch}}} + \underbrace{\sum_{i=1}^{I} u_i^{\text{disapp}}}_{C^{\text{disapp}}} \qquad (23)$$

subject to: constraints (1) - (7), (12) - (22), and

$$p^{\text{dc}} \geq P_t^{\text{base}} + \sum_{i=1}^{I} p_{i,t}, \quad \forall t \tag{24}$$

$$x_{i,t}^{\text{switch}} = |x_{i,t+1}^{\text{plug}} - x_{i,t}^{\text{plug}}|, \quad \forall i, \forall t \tag{25}$$

$$u_i^{\text{disapp}} = \left(1 - x_i^{\text{leave}}\right) \sum_{k=1}^{K} \beta_k^{\text{disapp}} \left[\theta_k E_i^{\text{dem}} - (e_{i,t_i^{\text{d}}} - E_i^{\text{init}})\right]^+, \forall i \tag{26}$$

The optimality of this operation model relies on the assumption of complete information of future charging demands in the optimization horizon, which is rarely satisfied in practice. In fact, the assumption can be violated by various uncertainties and disturbances, including inaccurate forecasts on future sessions, early or late departure of parked PEVs, and heterogeneous and stochastic waiting tolerance, etc.

To overcome such challenges, model predictive control (MPC) (or so-called receding horizon control (RHC)) is applied. The MPC (RHC) re-optimizes at each time step and adaptively improves scheduling quality as more information becomes available, such that scheduled operations are corrected at each time step. In a preferable embodiment, time steps at the end of the horizon (i.e., at the horizon "tail") can be appropriately modeled more roughly, which provides an opportunity to speed up the optimization process. For example, an optimization horizon of 24 hours can be divided into 21 time steps: each of the first eight time steps is 15 minutes long, and then there are four 1-hour time steps, followed by nine 2-hour time steps. In this example, the optimization computation can be accelerated to an average of 9 seconds per time step. The arrival and departure time of future PEVs may have to be rounded, and thus the optimization might be sub-optimal (or even infeasible). However, that possible suboptimality or infeasibility is not a real problem, because re-scheduling will be performed at each of the future time steps.

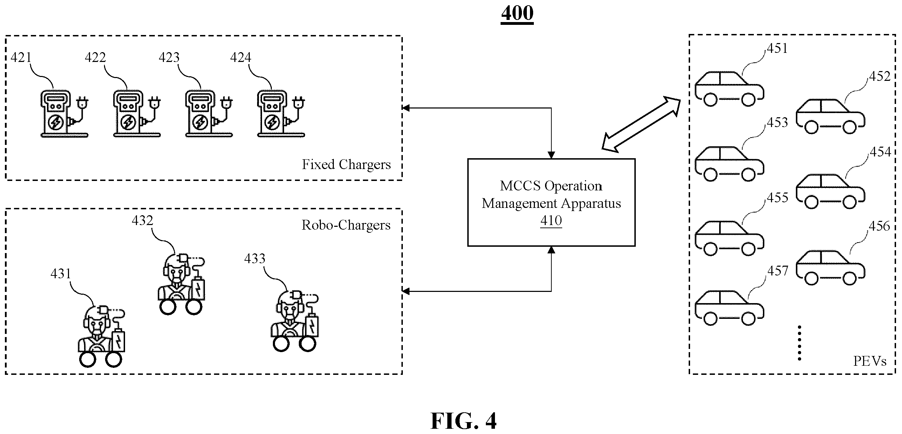

FIG. 4 shows a block diagram of a mixed-type charger charging station, in accordance with exemplary embodiments of the present disclosure. As shown in FIG. 4, the mixed-type charger charging station 400 includes an MCCS operation management apparatus 410. Under the control of the MCCS operation management apparatus 410, a group of fixed chargers 421-424 and a group of robotic chargers 431-433 provide charging services to PEVs 451-457 arriving at the charging station 400.

As stated above, the fixed chargers 421-424 each can serve a particular parking spot, while the robotic chargers 431-433 are capable of routing automatically in the charging station 400 to plug and unplug PEVs. The robotic chargers 431-433 can be implemented as either grid-connected, or isolated with a battery. Although FIG. 4 shows four fixed chargers and three robotic chargers, these numbers are not restrictive. Other portfolios of fixed chargers and robotic chargers are feasible without departing from the scope of the present disclosure.

Note that all technical features are not illustrated in FIG. 4 in the interest of simplicity. It will be understood that the mixed-type charge charging station 400 includes additional components and modules not shown in FIG. 4, for example, structures and functions related to billing and payment, AC power sources, battery storages, etc., are not shown in the drawing and not described here.

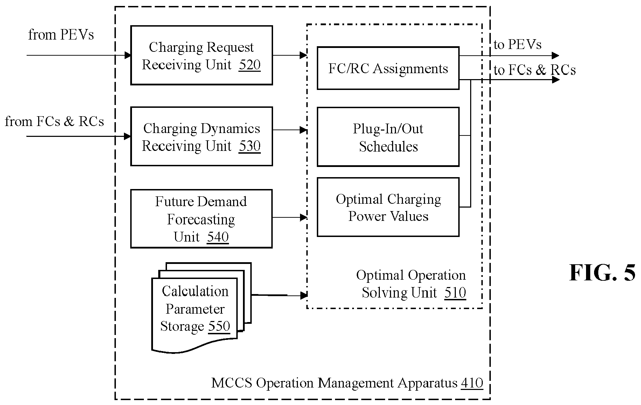

FIG. 5 shows a block diagram of an apparatus for managing the operation of a mixed-type charger charging station, in accordance with exemplary embodiments of the present disclosure. The MCCS operation management apparatus 410 includes an optimal operation solving unit 510, a charging request receiving unit 520, a charging dynamics receiving unit 530, a future demand forecasting unit 540, and calculation parameter storage 550.

At the beginning of an optimization horizon, upon receiving a charging request from a PEV that newly arrives at the charging station 400 to take charging service, the charging request receiving unit 520 obtains a charging demand of the new arrived PEV, based on the charging request.

The charging dynamics receiving unit 530 receives charging dynamics of PEVs (if any) that have been staying at the charging station 400 before the optimization horizon. Based on the charging dynamics, the charging dynamics receiving unit 530 obtains charging demands of these existing PEVs. In a non-limiting example, the charging dynamics can be measured and sent by the chargers to the charging dynamics receiving unit 530. Alternatively, the charging dynamics can be acquired directly from the PEVs.

The future demand forecasting unit 540 generates a charging demand forecast for future time steps within the optimization horizon. For example, the future demand forecast can be generated based on historical charging event data collected at the charging station 400 and/or data from other sources, including data inputted by an operator of the charging station 400.

The calculation parameter storage 550 stores parameters required in the optimization, e.g., charging prices, TOU tariffs, demand charges, unsatisfied penalties, thresholds for short-in-charge, waiting-tolerance factors, etc.

Based on the charging demands, the future demand forecast and the calculation parameters, the optimal operation solving unit 510 solve an optimal operation solution. Charger assignments of newly arrived PEVs, plug-in/out schedules of each time step, and optimized charging power values of each time step are determined based on the solved optimal operation solution, and sent to the PEVs, the fixed chargers, and/or the robotic chargers.

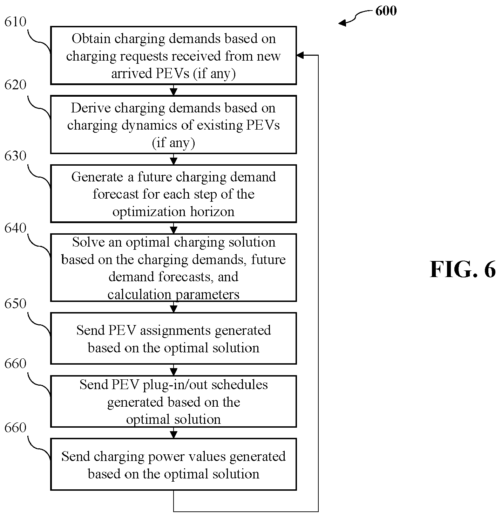

FIG. 6 shows a flow chart of a process performed by an apparatus for optimizing the operation of a mixed-type charger charging station, in accordance with exemplary embodiments of the present disclosure. At step 610, in response to receiving charging requests from PEVs that newly arrive at the charging station 400, charging demands of these newly arrived PEVs are obtained.

At step 620, in response to receiving charging dynamics of PEVs that have parked at the charging station 400, charging demands of these PEVs are obtained. The charging dynamics can be transmitted by the fixed chargers and the robotic chargers, or by the PEVs themselves.

At step 630, a future demand forecast for each time step of the optimization horizon is generated based on historical charging event data and/or data from other sources.

At step 640, an optimal charging solution is solved based on the charging demands of the newly arrived PEVS and the existing PEVs, the charging demand forecasts, and calculation parameters. As described above, for a given MCCS (i.e., both the number M of fixed chargers and the number N of the robotic chargers have been determined), three types of decision-making needs to be optimized. That is, in order to maximize its net profit, it is required to determine: (a) for each newly arrived PEV (excluding those leaving directly), whether to assign it to a fixed charger, or to add it into the service queue of the robotic chargers; (b) at each time step, which PEVs in the service queue of the robotic chargers to be plugged-in; (c) at each time step, an optimized charging power of each charger.

At steps 650, 660, and 670, PEV assignments, PEV plug-in/out schedules, and optimized charging power values generated based on the optimal charging solution are sent to corresponding PEVs, fixed chargers, and/or robotic chargers. As described above, the process 600 is iteratively performed at each time step to achieve a model predictive control (or receding horizon control) scheme.

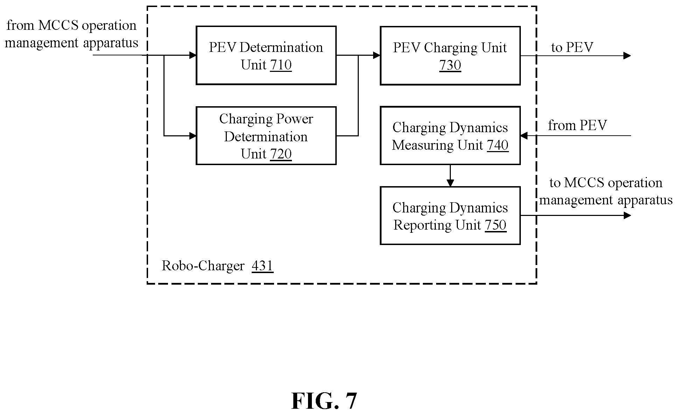

FIG. 7 shows a block diagram of a robotic charger, in accordance with exemplary embodiments of the present disclosure. Any of the robotic chargers 431-433 in FIG. 4 can be implemented as shown and described in reference to FIG. 7. Taking the robotic charger 431 as an example, it includes a PEV determination unit 710, a charging power determination unit 720, a PEV charging unit 730, a charging dynamics measuring unit 740, and a charging dynamics reporting unit 750. The PEV determination unit 710 receives instructions from the MCCS operation management apparatus 410 and determines a target PEV to be charged by the robotic charger 431 at a time step. The charging power determination unit 720 receives instructions from the management apparatus 410 and determines a charging power to charge the target PEV at the time step. The PEV charging unit 730 charges the determined target PEV with the determined charging power value at the time step. The charging dynamics measuring unit 740 measures the charging dynamics of the target PEV. The charging dynamics reporting unit 750 sends the charging dynamics measured at the end of the time step to the MCCS operation management apparatus 410. Without departing from the scope of the present disclosure, the target PEV can be configured to report the charging dynamics thereof to the MCCS operation management apparatus 410. In this case, the charging dynamics measuring unit 740 and the charging dynamics reporting unit 750 can be omitted from the robotic charger 431.

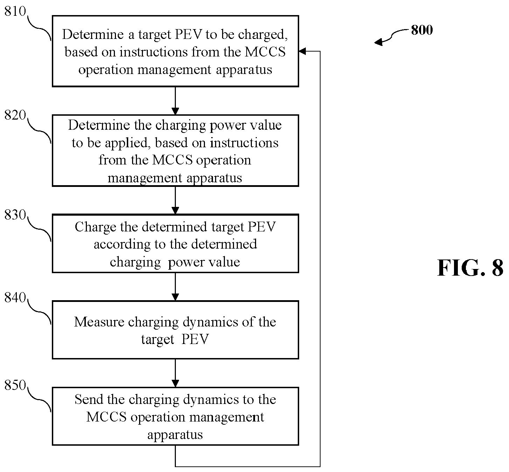

FIG. 8 shows a flow chart of a process performed by a robotic charger, in accordance with exemplary embodiments of the present disclosure. At step 810, based on instructions from the MCCS operation management apparatus 410, the robotic charger determines a target PEV to be charged at a time step. At step 820, based on instructions from the MCCS operation management apparatus 410, the robotic charger determines the charging power value to be applied at the time step. At step 830, the robotic charger charges the determined target PEV with the determined charging power at the time step. At step 840, the robotic charger measures the charging dynamics of the target PEV. At step 850, the robotic charger sends the charging dynamics of the target PEV measured at the end of the time step to the MCCS operation management apparatus 410.

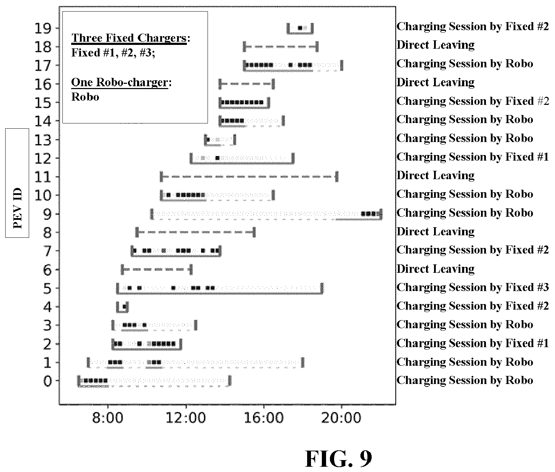

FIG. 9 is a conceptual illustration of a profile of 20 charging sessions corresponding to 20 PEVs (i.e., PEVs #0-#19) at a MCCS that is equipped with three fixed chargers (i.e., "Fixed #1/2/3") and one robotic charger (i.e., "Robo"), in accordance with exemplary embodiments of the present disclosure. Each horizontal bar represents an individual charging session or a direct leaving. Shades of squared dots in the session bars represent charging power at the corresponding time step, the deeper the higher.

Among the 20 PEVs, PEVs, #0, #1, #4, #9, #10, #13, #14, and #17 are assigned to the robotic charger Robo, which performs interchange operations among those PEVs. PEVs #2, #4, #5, #7, #12, #15, and #19 are assigned to the fixed chargers #1, #2 and #3, which charge the PEVs after they complete their previous charging sessions. PEVs #6, #8, #11, #16, and #18 leave directly without taking the charging service.

For optimizing the deployment of facilities in the charging station 400, the MCCS operation management apparatus 410 can include a planning unit (not shown in the drawings) that determining a best combination of fixed chargers and robotic chargers.

Typically, the capital expenditure ("CAPEX") of a level-2 fixed charger with maximum charging power of 6.6 kW is $5,400 for 10 years, or $1.50 per day, including installment and maintenance fees. Due to the complexity in hardware, software, manufacture, and maintenance, etc., the CAPEX of a robotic charger is approximately twice that of a fixed charger. Given the numbers of fixed chargers and robotic chargers installed in a charging station, the operation expenditure (OPEX) of the charging station can be estimated using a collection of typical daily charging demands.

In a non-limiting embodiment of the planning unit, let the number of fixed chargers be $m$ and the number of robotic chargers be $n$, the total cost of ownership (TCO) of the charging station is calculated as the sum of CAPEX and OPEX. Then, this model is reformulated as a mixed-integer linear programming (MILP) problem. Accordingly, a best portfolio $\{m^*, n^*\}$ that minimizes TCO can be solved:

$$\{m^*, n^*\} = \operatorname{argmin} \operatorname{TCO} = \operatorname{argmin} (\operatorname{CAPEX} + \operatorname{OPEX}) \quad (27)$$

Besides, some extra constraints can be added in to the above planning model, including but not limited to, satisfaction rate requirements, multiple typical daily demand profiles, etc.

The satisfaction rate (SR) r can be defined as the proportion of satisfied customers to all customers (including leaving), and enforce the constraint that SR is above some given requirement $\rho$:

$$r = \frac{1}{I} \sum_{i=1}^{I} \mathbf{1}\left\{e_{i,t_i^{\mathrm{d}}} - E_i^{\mathrm{init}} \geq \theta^{\mathrm{sr}} E_i^{\mathrm{dem}}\right\} \geq \rho \quad (28)$$

where $\theta^{sr}$, e.g., 0.9, is some threshold that a session can be regarded as "satisfied" although the charging demand may not be exactly met.

Daily PEV charging demands fluctuate considerably across the year, so it helps to consider multiple typical daily demand profiles in planning. Suppose there are $S$ sub-scenarios to consider, indexed with $s = 1, \ldots, S$ with corresponding probability $\pi_s$, the overall OPEX is the weighted average of OPEX under each sub-scenario:

$$\operatorname{OPEX} = \sum_{s=1}^{S} \pi_s \operatorname{OPEX}_s(\mathcal{D}_T^s) \quad (29)$$

For constraints (24), (28), S sub-scenarios are weighted-summed to form the new constraint. For other constraints, each is rewritten as S individual sub-constraints, i.e., they hold for every s.

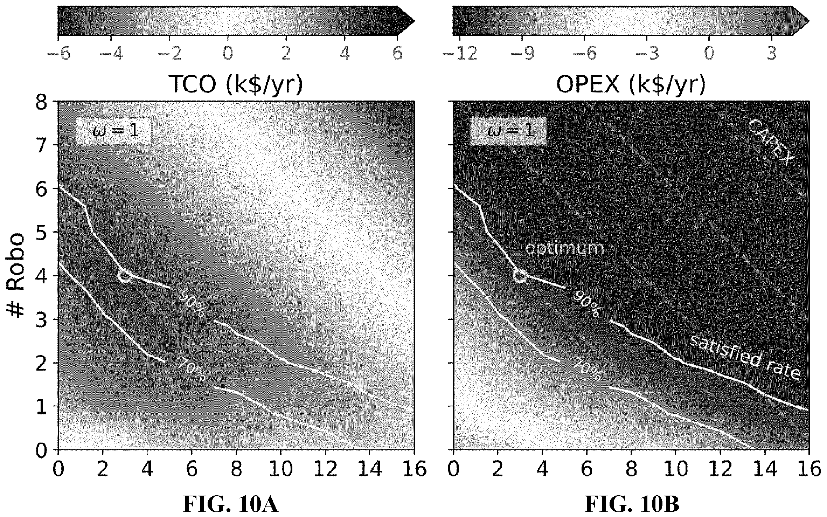

As an example, the graphs in FIGs. 10A and 10B illustrate different TCOs, OPEXes, and SRs achieved with different combinations of fixed chargers and robotic chargers. With drivers' waiting tolerance set as $\omega = 1$, a global optimal combination is returned by solving the model above, which is m*=3 and n*=4.

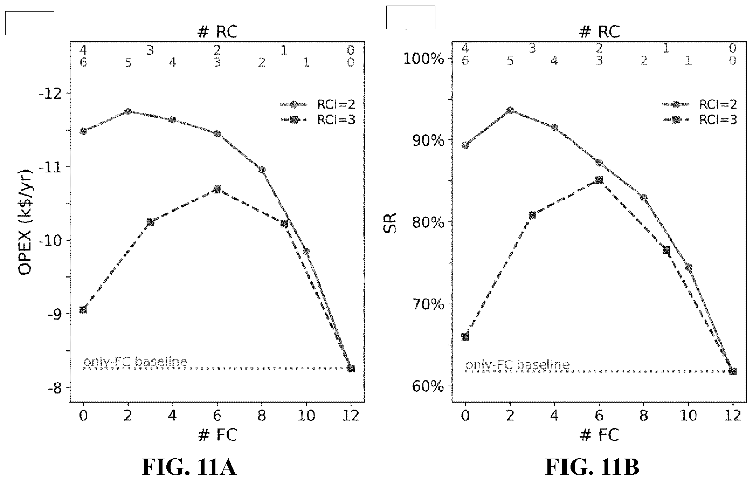

Another non-limiting embodiment for solving the best portfolio is illustrated in FIGs. 11A and 11B. Thanks to the flexibility introduced by robotic chargers, different portfolios of chargers can share the same capital cost and have considerably different revenues and satisfaction rates. By replacing some fixed chargers with at least one robotic charger, both station revenue and satisfaction rate increase.

As can be seen from FIGs. 11A and 11B, by keeping an unchanged CAPEX and replacing fixed chargers with robotic chargers, the OPEX is minimized (best) at a certain combination, and usually, the satisfaction rate also achieves the best at the same time. For example, by transforming from "5 fixed chargers only" to "1 fixed charger plus 2 robotic chargers", the charging station revenue increases by $3,800 annually and satisfaction rate increases by 35%, although the number of total chargers decreases.

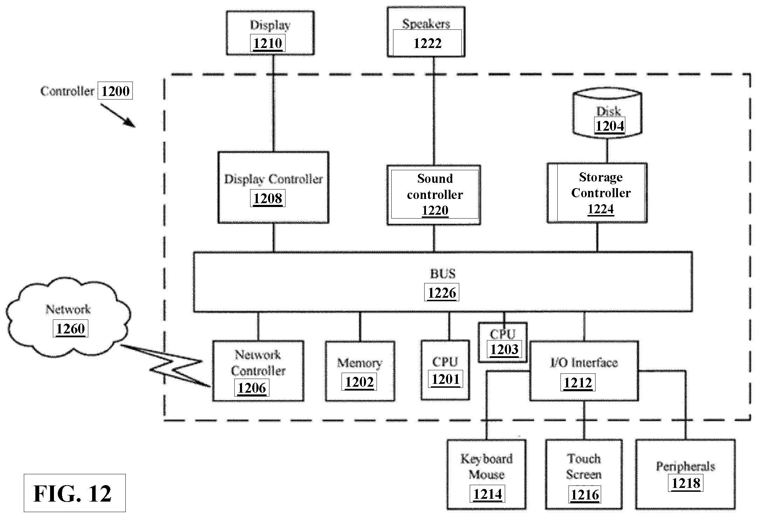

FIG. 12 is a block diagram of computing hardware that may form an operation management apparatus of a mixed-type charger charging station, according to exemplary embodiments of the present disclosure. In FIG. 12, a controller 1200 is shown as representative of the MCCS operation management apparatus of FIG. 4 and FIG. 5, in which the controller 1200 includes computing circuitry, including a CPU 1201 and/or a CPU 1203, which can perform the optimization processes of operation and/or planning. The process data and instructions may be stored in memory 1202.

The instructions may include algorithms or calculations to apply the operation model and/or the planning model to determine the optimal solutions. These processes and instructions may also be stored on a storage medium disk 1204 such as a hard drive (HDD) or portable storage medium, or may be stored remotely.

Further, the MCCS operation management apparatus 410 and processes thereof in the present disclosure are not limited by the form of the computer-readable media on which the instructions of the inventive process are stored. For example, the instructions may be stored on CDs, DVDs, in FLASH memory, RAM, ROM PROM, EPROM, EEPROM, hard drive, or any other information processing device with which the computing device communicates, such as a server or computer.

Further, the instructions may be provided as a utility application, background daemon, or component of an operating system, or combination thereof, executing in conjunction with CPU 1201, 1203 and an operating system such as, Microsoft Windows® UNIX®, Solaris®, LINUX®, Apple MAC-OS® and other systems known to those skilled in the art.

The hardware elements in order to achieve the MCCS operation management apparatus 410 may be realized by various circuitry elements. For example, CPU 1201 or CPU 1203 may be a Xeon® or Core™ processor from Intel of America or an Opteron® processor from AMD of America, or may be other processor types that would be recognized by one of ordinary skill in the art. Alternatively, the CPU 1201, 1203 may be implemented on an FPGA, ASIC, PLD or using discrete logic circuits. Further, CPU 1201, 1203 may be implemented as multiple processors cooperatively working in parallel to perform the instructions of the inventive processes described above.

The computing device in FIG. 12 also includes a network controller 1206 for interfacing with network 1260. As can be appreciated, the network 1260 can be a public network, such as the internet, or a private network such as an LAN or WAN network, or any combination thereof and can also include PSTN or ISDN sub-networks. The network 1260 can also be wired, such as an Ethernet™ network, or can be wireless such as a cellular network including EDGE®, 3G, 4G® and 5G™ wireless cellular systems. The wireless network can also be WIFI®, BLUETOOTH®, RF, or any other wireless form of communication that is known.

The computing device further includes a display controller 1208, such as a NVIDIA® GeForce® GTX or Quadro™ graphics adaptor from NVIDIA Corporation of America for interfacing with display 1210, such as a Hewlett Packard HPL2445w LCD monitor. A general purpose I/O interface 1212 interfaces with a keyboard and/or mouse 1214 as well as a touch screen panel 1216 on or separate from display 1210. The general purpose I/O interface also connects to a variety of peripherals 1218 including printers and scanners.

A sound controller 1220 is also provided in the computing device, such as Sound Blaster X-Fi® Titanium from Creative, to interface with speakers/microphone 1222. The microphone and speakers may be part of a user interface 104.

The general purpose storage controller 1224 connects the storage medium disk 1204 with communication bus 1226, which may be a PCI®, PCIe® bus or the like for interconnecting all of the components of the computing device. A description of the general features and functionality of the display 1210, keyboard and/or mouse 1214, as well as the display controller 1208, storage controller 1224, network controller 1206, sound controller 1220, and general purpose I/O interface 1212 is omitted herein for brevity. The exemplary circuit elements described in the context of the present disclosure may be replaced with other elements and structured differently than the examples provided herein. Moreover, circuitry configured to perform features described herein may be implemented in multiple circuit units (e.g., chips), or the features may be combined in circuitry on a single chipset.

Moreover, the present disclosure is not limited to the specific circuit elements described herein, nor is the present disclosure limited to the specific sizing and classification of these elements.

The functions and features described herein may also be executed by various distributed components of a system. For example, one or more processors may execute these system functions of the present disclosure, wherein the processors are distributed across multiple components communicating in a network. The distributed components may include one or more client and server machines, which may share processing, in addition to various human interface and communication devices (e.g., display monitors, smart phones, tablets, or the like.

The network may be a private network, such as a local area network or wide area network, or may be a public network, such as the internet. Input to the system may be received via direct user input and received remotely either in real-time or as a batch process. Additionally, some implementations may be performed on modules or hardware not identical to those described. Accordingly, other implementations are within the scope that may be claimed.

The above-described hardware description is a non-limiting example of corresponding structure for performing the functionality described herein.

Obviously, numerous modifications and variations of the present disclosure are possible in light of the above teachings. It is therefore to be understood that within the scope of the appended claims, the disclosure may be practiced otherwise than as specifically described herein.

Embodiments of the present disclosure can be set forth in the following parentheticals.

(1) A method for operating an electric vehicle charging station, the charging station comprising a first number of fixed chargers and a second number of mobile devices, each of the mobile devices being configured to move in the charging station to plug and unplug an electric vehicle, the method comprising: at a time step, obtaining, upon receiving a charging request from an electric vehicle arriving at a beginning of the time step, a first charging demand; deriving, upon receiving charging dynamics of an electric vehicle having been staying at the charging station before the time step, a second charging demand; generating, with respect to an optimization horizon including the time step and a plurality of subsequent time steps, a charging demand forecast; and solving, with respect to the optimization horizon, an optimal operation solution, based on the first charging demand, the second charging demand, and the charging demand forecast.

(2) The method of (1), wherein the solving step further comprises: deciding, for the electric vehicle arriving at the beginning of the time step, whether the electric vehicle is assigned to a specific one of the first number of fixed chargers, or is added into a service queue of the second number of mobile devices; determining, with respect to each step in the optimization horizon, which one or more electric vehicles in the service queue are plugged and/or unplugged by the second number of mobile devices; and calculating, with respect to each step in the optimization horizon, a charging power value for one or more of the first number of fixed chargers and the second number of mobile devices.

(3) The method of (1), wherein the solving step further comprises solving the optimal operation solution such that an operation cost of the charging station is minimized with respect to the optimization horizon.

(4) The method of (3), wherein the operation cost is calculated based on an income from a charging fee, an expense for grid energy consumption, a demand charge, a penalty on disappointment of a customer on a charging service, and/or a penalty on an unnecessary plugging and/or unplugging of an electric vehicle.

(5) The method of (2), wherein the obtaining step, the deriving step, the generating step, and the solving step are performed in an iterative manner at each of the plurality of subsequent time steps to apply a receding horizon control.

(6) The method of (5), wherein for one or more time steps at an end of the optimization horizon, the determining step and/or the calculating step are performed with a model rougher than that for one or more time steps at a beginning of the optimization horizon.

(7) The method of (1), wherein the generating step further comprises generating the charging demand forecast based on historical charging event data collected at the charging station and/or input parameters from an operator of the charging station.

(8) The method of (1), further comprising: calculating, for each of a plurality of combinations of the first number of fixed chargers and the second number of mobile devices, a total cost of ownership, based on a capital expense corresponding to said each combination and an operation expense corresponding to said each combination; and determining an optimal combination of the first number of fixed chargers and the second number of mobile devices such that the corresponding total cost of ownership is minimized.

(9) The method of (1), further comprising: calculating, with respect to the first number of fixed chargers and the second number of mobile devices, a capital expense and an operation expense; keeping the capital expense unchanged and replacing one or more of the first number of fixed chargers with at least one mobile device to calculate a corresponding operation expense; and determining an optimal combination of the first number of fixed chargers and the second number of mobile devices such that the corresponding operation expense is minimized.

(10) An apparatus for operating an electric vehicle charging station, the charging station comprising a first number of fixed chargers and a second number of mobile devices, each of the mobile devices being configured to move in the charging station to plug and unplug an electric vehicle, the apparatus comprising a processor and a non-transitory memory storing instructions executable by the processor, wherein the instructions, when executed by the processor, perform a method comprising: at a time step, obtaining, upon receiving a charging request from an electric vehicle arriving at a beginning of the time step, a first charging demand; deriving, upon receiving charging dynamics of an electric vehicle having been staying at the charging station before the time step, a second charging demand; generating, with respect to an optimization horizon including the time step and a plurality of subsequent time steps, a charging demand forecast; and solving, with respect to the optimization horizon, an optimal operation solution, based on the first charging demand, the second charging demand, and the charging demand forecast.

(11) The apparatus of (10), wherein the solving step further comprises: deciding, for the electric vehicle arriving at the beginning of the time step, whether the electric vehicle is assigned to a specific one of the first number of fixed chargers, or is added into a service queue of the second number of mobile devices; determining, with respect to each step in the optimization horizon, which one or more electric vehicles in the service queue are plugged and/or unplugged by the second number of mobile devices; and calculating, with respect to each step in the optimization horizon, a charging power value for one or more of the first number of fixed chargers and the second number of mobile devices.

(12) The apparatus of (10), wherein the solving step further comprises solving the optimal operation solution such that an operation cost of the charging station is minimized with respect to the optimization horizon.

(13) The apparatus of (12), wherein the operation cost is calculated based on an income from a charging fee, an expense for grid energy consumption, a demand charge, a penalty on disappointment of a customer on a charging service, and/or a penalty on an unnecessary plugging and/or unplugging of an electric vehicle.

(14) The apparatus of (11), wherein the obtaining step, the deriving step, the generating step, and the solving step are performed in an iterative manner at each of the plurality of subsequent time steps to apply a receding horizon control.

(15) The apparatus of (14), wherein for one or more time steps at an end of the optimization horizon, the determining step and/or the calculating step are performed with a model rougher than that for one or more time steps at a beginning of the optimization horizon.

(16) The apparatus of (10), wherein the generating step further comprises generating the charging demand forecast based on historical charging event data collected at the charging station and/or input parameters from an operator of the charging station.

(17) The apparatus of (10), wherein the method further comprises: calculating, for each of a plurality of combinations of the first number of fixed chargers and the second number of mobile devices, a total cost of ownership, based on a capital expense corresponding to said each combination and an operation expense corresponding to said each combination; and determining an optimal combination of the first number of fixed chargers and the second number of mobile devices such that the corresponding total cost of ownership is minimized.

(18) The apparatus of (10), further comprising: calculating, with respect to the first number of fixed chargers and the second number of mobile devices, a capital expense and an operation expense; keeping the capital expense unchanged and replacing one or more of the first number of fixed chargers with at least one mobile device to calculate a corresponding operation expense; and determining an optimal combination of the first number of fixed chargers and the second number of mobile devices such that the corresponding operation expense is minimized.

(19) A non-transitory computer readable medium having instructions stored therein that, when executed by one or more processors, cause the one or more processors to perform a method for operating an electric vehicle charging station, the charging station comprising a first number of fixed chargers and a second number of mobile devices, each of the mobile devices being configured to move in the charging station to plug and unplug an electric vehicle, the method comprising: at a time step, obtaining, upon receiving a charging request from an electric vehicle arriving at a beginning of the time step, a first charging demand; deriving, upon receiving charging dynamics of an electric vehicle having been staying at the charging station before the time step, a second charging demand; generating, with respect to an optimization horizon including the time step and a plurality of subsequent time steps, a charging demand forecast; and solving, with respect to the optimization horizon, an optimal operation solution, based on the first charging demand, the second charging demand, and the charging demand forecast.

(20) The non-transitory computer readable medium of (19), wherein the solving step further comprises: deciding, for the electric vehicle arriving at the beginning of the time step, whether the electric vehicle is assigned to a specific one of the first number of fixed chargers, or is added into a service queue of the second number of mobile devices; determining, with respect to each step in the optimization horizon, which one or more electric vehicles in the service queue are plugged and/or unplugged by the second number of mobile devices; and calculating, with respect to each step in the optimization horizon, a charging power value for one or more of the first number of fixed chargers and the second number of mobile devices.

**Claims**

1. A method for operating an electric vehicle charging station, the charging station comprising a first number of fixed chargers and a second number of mobile devices, each of the mobile devices being configured to move in the charging station to plug and unplug an electric vehicle, the method comprising:
   at a time step,

   obtaining, upon receiving a charging request from an electric vehicle arriving at a beginning of the time step, a first charging demand;
   deriving, upon receiving charging dynamics of an electric vehicle having been staying at the charging station before the time step, a second charging demand;
   generating, with respect to an optimization horizon including the time step and a plurality of subsequent time steps, a charging demand forecast; and
   solving, with respect to the optimization horizon, an optimal operation solution, based on the first charging demand, the second charging demand, and the charging demand forecast.

2. The method of claim 1, wherein the solving step further comprises:

   deciding, for the electric vehicle arriving at the beginning of the time step, whether the electric vehicle is assigned to a specific one of the first number of fixed chargers, or is added into a service queue of the second number of mobile devices;
   determining, with respect to each step in the optimization horizon, which one or more electric vehicles in the service queue are plugged and/or unplugged by the second number of mobile devices; and
calculating, with respect to each step in the optimization horizon, a charging power value for one or more of the first number of fixed chargers and the second number of mobile devices.

3. The method of one of claims 1 or 2, wherein the solving step further comprises solving the optimal operation solution such that an operation cost of the charging station is minimized with respect to the optimization horizon.

4. The method of claim 3, wherein the operation cost is calculated based on an income from a charging fee, an expense for grid energy consumption, a demand charge, a penalty on disappointment of a customer on a charging service, and/or a penalty on an unnecessary plugging and/or unplugging of an electric vehicle.

5. The method of one of claims1 to 4, wherein the obtaining step, the deriving step, the generating step, and the solving step are performed in an iterative manner at each of the plurality of subsequent time steps to apply a receding horizon control.

6. The method of one of claims 2 to 5, wherein for one or more time steps at an end of the optimization horizon, the determining step and/or the calculating step are performed with a model rougher than that for one or more time steps at a beginning of the optimization horizon.

7. The method of one of claims 1 to 6, wherein the generating step further comprises generating the charging demand forecast based on historical charging event data collected at the charging station and/or input parameters from an operator of the charging station.

8. The method of one of claims 1 to 7, further comprising:

calculating, for each of a plurality of combinations of the first number of fixed chargers and the second number of mobile devices, a total cost of ownership, based on a capital expense corresponding to said each combination and an operation expense corresponding to said each combination; and
determining an optimal combination of the first number of fixed chargers and the second number of mobile devices such that the corresponding total cost of ownership is minimized.

9. The method of one of claims 1 to 8, further comprising:

calculating, with respect to the first number of fixed chargers and the second number of mobile devices, a capital expense and an operation expense;
keeping the capital expense unchanged and replacing one or more of the first number of fixed chargers with at least one mobile device to calculate a corresponding operation expense; and
determining an optimal combination of the first number of fixed chargers and the second number of mobile devices such that the corresponding operation expense is minimized.

10. An apparatus for operating an electric vehicle charging station, the charging station comprising a first number of fixed chargers and a second number of mobile devices, each of the mobile devices being configured to move in the charging station to plug and unplug an electric vehicle, the apparatus comprising a processor and a non-transitory memory storing instructions executable by the processor, wherein the instructions, when executed by the processor, perform a method comprising:
at a time step,

obtaining, upon receiving a charging request from an electric vehicle arriving at a beginning of the time step, a first charging demand;
deriving, upon receiving charging dynamics of an electric vehicle having been staying at the charging station before the time step, a second charging demand;
generating, with respect to an optimization horizon including the time step and a plurality of subsequent time steps, a charging demand forecast; and
solving, with respect to the optimization horizon, an optimal operation solution, based on the first charging demand, the second charging demand, and the charging demand forecast.

11. The apparatus of claim 10, wherein the solving step further comprises:

deciding, for the electric vehicle arriving at the beginning of the time step, whether the electric vehicle is assigned to a specific one of the first number of fixed chargers, or is added into a service queue of the second number of mobile devices;

determining, with respect to each step in the optimization horizon, which one or more electric vehicles in the service queue are plugged and/or unplugged by the second number of mobile devices; and

calculating, with respect to each step in the optimization horizon, a charging power value for one or more of the first number of fixed chargers and the second number of mobile devices.

12. The apparatus of one of claims 10 or 11, wherein the solving step further comprises solving the optimal operation solution such that an operation cost of the charging station is minimized with respect to the optimization horizon.

13. The apparatus of claim 12, wherein the operation cost is calculated based on an income from a charging fee, an expense for grid energy consumption, a demand charge, a penalty on disappointment of a customer on a charging service, and/or a penalty on an unnecessary plugging and/or unplugging of an electric vehicle.

14. The apparatus of one of claims 10 to 13, wherein the obtaining step, the deriving step, the generating step, and the solving step are performed in an iterative manner at each of the plurality of subsequent time steps to apply a receding horizon control.

15. The apparatus of one of claims 11 to 14, wherein for one or more time steps at an end of the optimization horizon, the determining step and/or the calculating step are performed with a model rougher than that for one or more time steps at a beginning of the optimization horizon.

16. The apparatus of one of claims 10 to 15, wherein the generating step further comprises generating the charging demand forecast based on historical charging event data collected at the charging station and/or input parameters from an operator of the charging station.

17. The apparatus of one of claims 10 to 16, wherein the method further comprises:

calculating, for each of a plurality of combinations of the first number of fixed chargers and the second number of mobile devices, a total cost of ownership, based on a capital expense corresponding to said each combination and an operation expense corresponding to said each combination; and

determining an optimal combination of the first number of fixed chargers and the second number of mobile devices such that the corresponding total cost of ownership is minimized.

18. The apparatus of one of claims 10 to 17, further comprising:

calculating, with respect to the first number of fixed chargers and the second number of mobile devices, a capital expense and an operation expense;

keeping the capital expense unchanged and replacing one or more of the first number of fixed chargers with at least one mobile device to calculate a corresponding operation expense; and

determining an optimal combination of the first number of fixed chargers and the second number of mobile devices such that the corresponding operation expense is minimized.

19. A non-transitory computer readable medium having instructions stored therein that, when executed by one or more processors, cause the one or more processors to perform a method for operating an electric vehicle charging station, the charging station comprising a first number of fixed chargers and a second number of mobile devices, each of the mobile devices being configured to move in the charging station to plug and unplug an electric vehicle, the method comprising:

at a time step,

obtaining, upon receiving a charging request from an electric vehicle arriving at a beginning of the time step, a first charging demand;

deriving, upon receiving charging dynamics of an electric vehicle having been staying at the charging station before the time step, a second charging demand;

generating, with respect to an optimization horizon including the time step and a plurality of subsequent time steps, a charging demand forecast; and

solving, with respect to the optimization horizon, an optimal operation solution, based on the first charging demand, the second charging demand, and the charging demand forecast.

20. The non-transitory computer readable medium of claim 19, wherein the solving step further comprises:

deciding, for the electric vehicle arriving at the beginning of the time step, whether the electric vehicle is assigned to a specific one of the first number of fixed chargers, or is added into a service queue of the second number of mobile devices;

determining, with respect to each step in the optimization horizon, which one or more electric vehicles in the service queue are plugged and/or unplugged by the second number of mobile devices; and

calculating, with respect to each step in the optimization horizon, a charging power value for one or more of the first number of fixed chargers and the second number of mobile devices.

**FIG. 1**

EP 4 389 507 A1

**FIG. 2**

**FIG. 3**

**FIG. 4**

EP 4 389 507 A1

from PEVs → **Charging Request Receiving Unit 520** → **FC/RC Assignments** → to PEVs

to FCs & RCs

from FCs & RCs → **Charging Dynamics Receiving Unit 530** → **Plug-In/Out Schedules**

**Future Demand Forecasting Unit 540** → **Optimal Charging Power Values**

**Calculation Parameter Storage 550** → **Optimal Operation Solving Unit 510**

MCCS Operation Management Apparatus 410

**FIG. 5**

**FIG. 6**

600

610 — Obtain charging demands based on charging requests received from new arrived PEVs (if any)

620 — Derive charging demands based on charging dynamics of existing PEVs (if any)

630 — Generate a future charging demand forecast for each step of the optimization horizon

640 — Solve an optimal charging solution based on the charging demands, future demand forecasts, and calculation parameters

650 — Send PEV assignments generated based on the optimal solution

660 — Send PEV plug-in/out schedules generated based on the optimal solution

660 — Send charging power values generated based on the optimal solution

from MCCS operation management apparatus

Robo-Charger 431

PEV Determination Unit 710

Charging Power Determination Unit 720

PEV Charging Unit 730

to PEV

Charging Dynamics Measuring Unit 740

from PEV

Charging Dynamics Reporting Unit 750

to MCCS operation management apparatus

**FIG.7**

800

810 — Determine a target PEV to be charged, based on instructions from the MCCS operation management apparatus

820 — Determine the charging power value to be applied, based on instructions from the MCCS operation management apparatus

830 — Charge the determined target PEV according to the determined charging power value

840 — Measure charging dynamics of the target PEV

850 — Send the charging dynamics to the MCCS operation management apparatus

FIG. 8

**FIG. 9**

**FIG. 10A**

**FIG. 10B**

27

FIG. 11B

FIG. 11A

FIG. 12

Europäisches
Patentamt

European
Patent Office

Office européen
des brevets

# EUROPEAN SEARCH REPORT

**Application Number**

**EP 23 21 9364**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/176841 A1 (MOURA SCOTT [US] ET AL) 9 June 2022 (2022-06-09) * paragraph [0030] – paragraph [0147]; figures 1-8 * | 1-20 | INV. B60L53/62 B60L53/63 B60L53/65 B60L53/66 B60L53/67 B60L53/68 B60L58/12 |
| A | US 2019/205842 A1 (STARNS ALEXANDER THOMAS [US]) 4 July 2019 (2019-07-04) * paragraph [0011] – paragraph [0075]; figures 1-7 * | 1-20 | |

**TECHNICAL FIELDS SEARCHED (IPC)**

B60L

The present search report has been drawn up for all claims

| Place of search | Date of completion of the search | Examiner |
|---|---|---|
| The Hague | 2 May 2024 | Altuntas, Mehmet |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 9364

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2024

| Patent document cited in search report | Publication date | Patent family member(s) | Publication date |
|---|---|---|---|
| US 2022176841 A1 | 09-06-2022 | NONE | |
| US 2019205842 A1 | 04-07-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. ZHANG ; Z. HU ; Z. XU ; Y. SONG.** Optimal Planning of PEV Charging Station with Single Output Multiple Cables Charging Spots. *IEEE Transactions on Smart Grid,* September 2017, vol. 8 (5), 2119-2128
- **M. R. SARKER ; H. PANDZIC ; M. A. ORTEGA.-VAZQUEZ.** Optimal Operation and Services Scheduling for an Electric Vehicle Battery Swapping Station. *IEEE Transactions on Power Systems,* March 2015, vol. 30 (2), 901-910
- **J. LINDGREN ; P. D. LUND.** Identifying Bottlenecks in Charging Infrastructure of Plug-In Hybrid Electric Vehicles Through Agent-Based Traffic Simulation. *International Journal of Low-Carbon Technologies,* June 2015, vol. 10 (2), 110-118
- **T. ZENG ; S. BAE ; B. TRAVACCA ; S. MOURA.** Inducing Human Behavior to Maximize Operation Performance at PEV Charging Station. *IEEE Transactions on Smart Grid,* July 2021, vol. 12 (4), 3353-3363

- **C. LU ; J. WU ; J. CUI ; Y. XU ; C. WU ; M. C. GONZALEZ.** Deadline Differentiated Dynamic EV Charging Price Menu Design. *IEEE Transactions on Smart Grid,* 2022, 1-1
- **T. ZENG ; H. ZHANG ; S. MOURA.** Solving Overstay and Stochasticity in PEV Charging Station Planning with Real Data. *IEEE Transactions on Industrial Informatics,* 2020, vol. 16 (5), 3504-3514
- **X. ZHANG ; Y. CAO ; L. PENG ; J. LI ; N. AHMAD ; S. YU.** Mobile Charging as a Service: A Reservation-Based Approach. *IEEE Transactions on Automation Science and Engineering,* 2020, vol. 17 (4), 1976-1988
- **J. QIU ; L. DU.** A Charging-as-a-Service Platform for Charging Electric Vehicles on the Move: New Vehicle Routing Model and Solution. *arXiv:2104.00730,* April 2021
- **Z. LAI ; S. LI.** On-Demand Valet Charging for Electric Vehicles: Economic Equilibrium, Infrastructure Planning and Regulatory Incentives. *Transportation Research Part C: Emerging Technologies,* July 2022, vol. 140, 103669